(19) Europäisches Patentamt
European Patent Office
Office européen des brevets

(11) **EP 4 757 197 A1**

(12) **EUROPEAN PATENT APPLICATION**
published in accordance with Art. 153(4) EPC

(43) Date of publication:
**10.06.2026  Bulletin 2026/24**

(21) Application number: **24849499.9**

(22) Date of filing: **26.07.2024**

(51) International Patent Classification (IPC):
*H04B 7/0456* (2017.01)     *H04B 7/06* (2006.01)
*H04W 72/0453* (2023.01)     *H04W 72/1268* (2023.01)
*H04W 72/232* (2023.01)

(52) Cooperative Patent Classification (CPC):
**H04B 7/0456; H04B 7/06; H04W 72/0453;
H04W 72/1268; H04W 72/232**

(86) International application number:
**PCT/KR2024/010910**

(87) International publication number:
**WO 2025/028930 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.08.2023  KR 20230100513**

(71) Applicant: **LG Electronics Inc.**
**Yeongdeungpo-gu**
**Seoul 07336 (KR)**

(72) Inventors:
• **KIM, Hyungtae**
  **Seoul 06772 (KR)**
• **KANG, Jiwon**
  **Seoul 06772 (KR)**
• **PARK, Haewook**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR PERFORMING PRECODING-BASED UPLINK TRANSMISSION AND RECEPTION IN WIRELESS COMMUNICATION SYSTEM**

(57)     Disclosed are a method and an apparatus for performing precoding-based uplink transmission and reception in a wireless communication system. A method performed by a terminal according to an embodiment of the present disclosure may comprise the steps of: receiving downlink control information (DCI) for scheduling an uplink data channel; and transmitting the uplink data channel on the basis of the DCI. Here, on the basis that subband-based precoding is applied to the uplink data channel, at least one vector in a precoding matrix indicated by the DCI may be applied as precoding information to at least one subband for the uplink data channel.

FIG.9

START

Receive downlink control information for scheduling of an uplink data channel — S910

Transmit the uplink data channel based on the downlink control information — S920

END

**Description**

[TECHNICAL FIELD]

The present disclosure relates to a wireless communication system, and more particularly, to a method and device for performing precoding-based uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing precoding-based uplink transmission and reception in a wireless communication system.

The technical problem of the present disclosure is to provide a method and device that support application of subband-specific precoding for uplink transmission and reception.

The technical objects to be achieved by the present disclosure are not limited to the above-described technical objects, and other technical objects which are not described herein will be clearly understood by those skilled in the pertinent art from the following description.

[Technical Solution]

A method performed by a UE in a wireless communication system according to an aspect of the present disclosure may comprise: receiving downlink control information (DCI) for scheduling an uplink data channel; and transmitting the uplink data channel based on the DCI. Herein, based on subband-based precoding being applied to the uplink data channel, at least one vector in a precoding matrix indicated by the DCI may be applied as precoding information to at least one subband of the uplink data channel.

A method performed by a base station in a wireless communication system according to an additional aspect of the present disclosure may comprise: transmitting downlink control information (DCI) for scheduling an uplink data channel; and receiving the uplink data channel based on the DCI. Herein, based on subband-based precoding being applied to the uplink data channel, at least one vector in a precoding matrix indicated by the DCI may be applied as precoding information to at least one subband of the uplink data channel.

[Technical Effects]

According to various embodiments of the present disclosure, a method and an apparatus for performing precoding-based uplink transmission and reception in a wireless communication system may be provided.

According to various embodiments of the present disclosure, a method and an apparatus supporting application of precoding on a per-subband basis for uplink transmission and reception may be provided.

According to various embodiments of the present disclosure, there is a technical effect in that a base station may indicate subband-level precoding information for uplink to a user equipment (UE) with low DCI overhead.

The technical objects to be achieved by the present disclosure are not limited to the above-described technical objects, and other technical objects which are not described herein will be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a general functional architecture related to Functionality-based LCM and Model-based LCM.
FIG. 8 illustrates signaling operations for procedures related to AI/ML.
FIG. 9 is a diagram for explaining an operation of a user equipment (UE) in a wireless communication system to which the present disclosure may be applied.
FIG. 10 is a diagram for explaining an operation of a base station in a wireless communication system to which the present disclosure may be applied.
FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The technology described in the present specification may be used in various wireless communication systems such as CDMA (code division multiple access), FDMA (frequency division multiple access), TDMA (time division multiple access), OFDMA (orthogonal frequency division multiple access), SC-FDMA (single carrier frequency division multiple access), and the like. CDMA may be implemented with wireless technologies such as UTRA (universal terrestrial radio access) or CDMA2000. TDMA may be implemented with wireless technologies such as GSM (global system for mobile communications)/GPRS (general packet radio service)/EDGE (enhanced data rates for GSM evolution). OFDMA may be implemented with wireless technologies such as IEEE (institute of electrical and electronics engineers) 802.11 (Wi-Fi), IEEE 802.16 (WiMAX), IEEE 802-20, E-UTRA (evolved UTRA), LTE (long term evolution), 5G NR, and the like.

The technology described in the present specification may be implemented with 6G wireless technology and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, a tactile internet, high throughput, high network capacity, high energy efficiency, low backhaul and access network congestion, and enhanced data security.

To clarify description, it is described based on a 3GPP communication system (e.g., LTE-A, NR, 6G), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR/6G may be referred to as a 3GPP system. "xxx" means a detailed number for a standard document. LTE/NR/6G may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power

- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

As described above, an NR system is a new clean-slate type mobile communication system having characteristics such as high performance, low latency, and high availability, as a successor technology of LTE (long term evolution). In the case of the NR system, all available spectrum resources may be utilized, ranging from a low-frequency band of less than 1 GHz, to a mid-frequency band of 1 GHz to 10 GHz, and a high-frequency (millimeter-wave) band of 24 GHz or higher. Based on the fundamental technologies of the NR system, a 6G mobile communication system (hereinafter, a 6G system) is being developed.

The 6G system aims at (i) a very high data rate per device, (ii) a very large number of connected devices, (iii) global connectivity, (iv) very low latency, (v) reducing energy consumption of battery-free IoT (internet of things) devices, (vi) ultra-high reliability connectivity, and (vii) connected intelligence having machine learning capability. A vision of the 6G system may have four aspects such as intelligent connectivity, deep connectivity, holographic connectivity, and ubiquitous connectivity.

A new RAT system (hereinafter, a next-generation RAT system) including an NR system and a 6G system uses an OFDM transmission scheme or a transmission scheme similar thereto. The next-generation RAT system may follow OFDM parameters different from OFDM parameters of LTE. Alternatively, the next-generation RAT system may follow the numerology of existing LTE/LTE-A as it is, but may support a larger system bandwidth (for example, 100 MHz). Alternatively, one cell may support a plurality of numerologies. That is, UEs operating with different numerologies may coexist within one cell.

A numerology corresponds to one subcarrier spacing in a frequency domain. As a reference subcarrier spacing is scaled by an integer N, a different numerology may be defined.

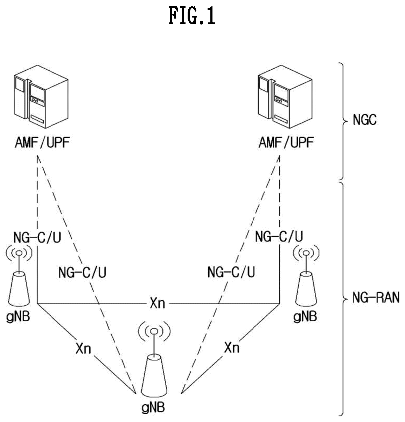

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

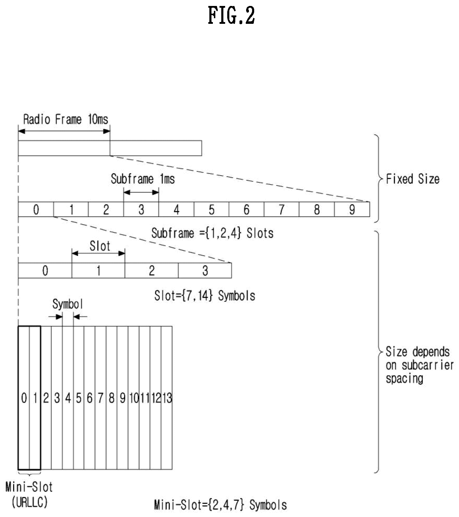

FIG. 2 illustrates a frame structure in a wireless communication system to which the present disclosure may be applied.

A next-generation RAT system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a next-generation RAT system.

Hereinafter, an OFDM numerology and frame structure which may be considered in a next-generation RAT system will be described. A plurality of OFDM numerologies supported in a next-generation RAT system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

The next-generation RAT system supports a plurality of numerologies (or subcarrier spacings (SCSs)) to support various 5G/6G services. For example, when the SCS is 15 kHz, a wide area in traditional cellular bands is supported; when the SCS is 30 kHz/60 kHz, dense-urban environments, lower latency, and a wider carrier bandwidth are supported; and when the SCS is 60 kHz or higher, a bandwidth greater than 24.25 GHz is supported to overcome phase noise. Although not described in Table 1, in the case of a 6G system, SCSs of 480 kHz/960 kHz may be additionally supported.

Frequency bands of the next-generation RAT system are defined as various types of frequency ranges (for example, FR1, FR2, etc.). For example, FR1 and FR2 may be configured as shown in Table 2 below. In addition, FR2 may refer to millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in a next-generation RAT system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink.

In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |

(continued)

| μ | $N_{symb}^{slot}$ | $N_{slot}^{frame,\mu}$ | $N_{slot}^{subframe,\mu}$ |
|---|---|---|---|
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a next-generation RAT system, an antenna port, a resource grid, a resource element, a resource block, a carrier part, etc. may be considered. Hereinafter, the physical resources which may be considered in a next-generation RAT system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

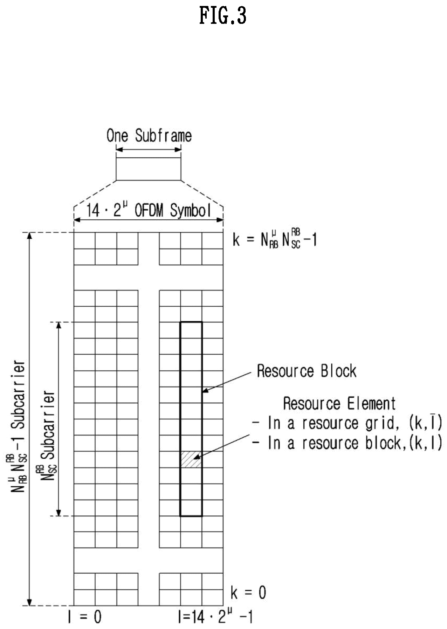

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In a next-generation RAT system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \le N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu}= \left\lfloor \frac{k}{N_{sc}^{RB}} \right\rfloor$$

In Equation I, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

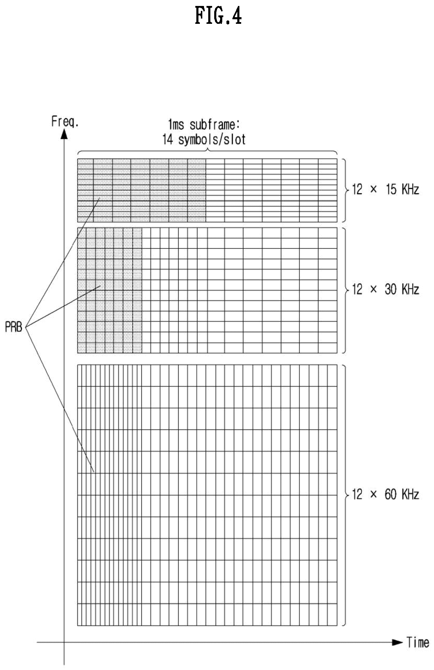

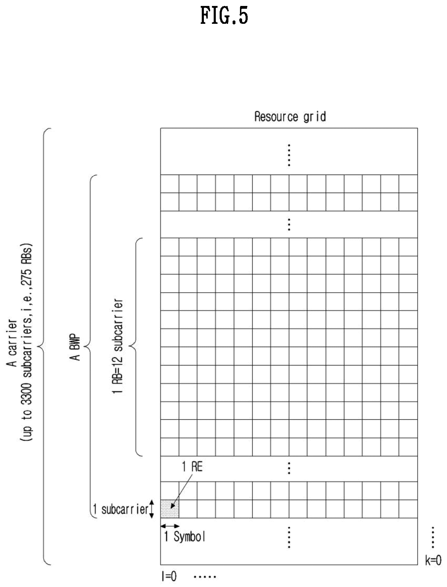

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In a next-generation RAT system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.).

In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

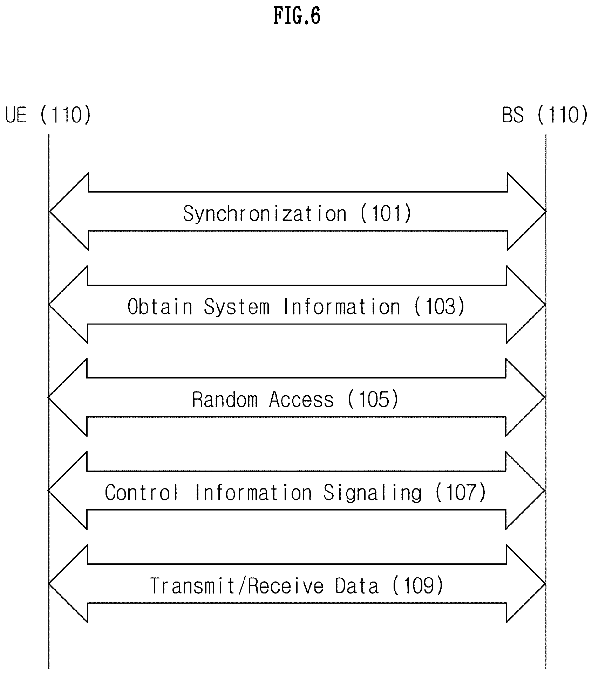

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

The second node of FIG. 6 supports dynamic spectrum sharing (DSS) and may provide connectivity to not only a node in which 6G technology is implemented but also a node in which wireless communication technology prior to 6G (e.g., 5G, 4G) is implemented. That is, the first node of FIG. 6 may be a node in which 6G technology is implemented or a node in which wireless communication technology prior to 6G (e.g., 5G, 4G) is implemented. In addition, the first node and/or the second node may support a full duplex mode as well as a non-overlapping full duplex mode.

In FIG. 6, for convenience of description, the first node and the second node are assumed to be a user equipment (UE) and a base station, respectively, and operations in which the UE (110) and the base station (120) transmit and/or receive data and operations performed prior thereto are exemplified. However, the operations of FIG. 6 are not limited to operations between the UE and the base station and may be interpreted as operations between the first node and the second node. In addition, FIG. 6 exemplifies direct transmission and reception of wireless signals between the UE (110) and the base station (120), but one or more intermediate points may exist between the UE (110) and the base station (120), and wireless signals may be transmitted and received via the one or more intermediate points.

Referring to FIG. 6, in step 101, the UE (110) and the base station (120) perform synchronization. For example, the UE (110) performs an initial cell search operation. Specifically, the UE (110) may detect at least one synchronization signal for base station access transmitted from the base station (120) according to predefined rules. Here, the synchronization signal may include a plurality of synchronization signals classified according to a structure or a purpose (e.g., a first synchronization signal (for example, a primary synchronization signal), a second synchronization signal (for example, a secondary synchronization signal), etc.). Through this, the UE (110) may identify boundaries of units (for example, frames, subframes, slots, and/or symbols) constituting wireless signal transmission of the base station (120) and may acquire information on the base station (120) (e.g., a cell identifier).

In step 103, the UE (110) acquires system information transmitted from the base station (120). The system information is information related to attributes, characteristics, and/or capabilities of the base station (120) required for accessing the base station (120) and using services, and may be classified according to content (e.g., whether it is essentially required for access), a transmission structure (e.g., a used channel, whether it is provided on demand), and the like. For example, the system information may be classified into first system information (e.g., a master information block (MIB), primary system information), second system information (e.g., a system information block (SIB), secondary system information), and the like. If necessary, the UE (110) may transmit a signal requesting system information before receiving the system information. However, the request and provision of the system information may be performed after a random access procedure described later.

In step 105, the UE (110) and the base station (120) perform a random access procedure. Based on information related to a channel for the random access procedure of the base station (120) acquired through system information (e.g., a channel location, a channel structure, a structure of supported preambles, etc.), the UE (110) may transmit and/or receive at least one message for the random access procedure (e.g., a random access preamble, a random access response (RAR) message, etc.). For example, the UE (110) may transmit a first message (e.g., a preamble, MSG1) through the channel for the random access procedure, receive a second message (e.g., an RAR message, MSG2), transmit, to the base station (120), a third message (e.g., MSG3) including information related to the UE (110) (e.g., identification information) by using scheduling information included in the second message, and receive a fourth message (e.g., MSG4) for contention resolution and/or connection establishment. As another example, the first message and the third message may be transmitted and received as one message, or the second message and the fourth message may be transmitted and received as one message.

In step 107, the UE (110) and the base station (120) perform signaling of control information. Here, the control information may be defined in various layers, such as a layer that controls a connection (e.g., a radio resource control (RRC) layer), a layer that handles mapping between logical channels and transport channels (e.g., a media access control (MAC) layer), and a layer that processes physical channels (e.g., a physical (PHY) layer). For example, the UE (110) and the base station (120) may perform at least one of signaling for establishing a connection, signaling for determining configurations related to communication, and signaling for indicating allocated resources.

In step 109, the UE (110) and the base station (120) transmit and/or receive data. In other words, the UE (110) and the base station (120) may process data and transmit and/or receive the data based on signaling of control information. For example, in the case of transmitting data, the UE (110) or the base station (120) may perform at least one of channel encoding, rate matching, scrambling, constellation mapping, layer mapping, waveform modulation, antenna mapping, and resource mapping on information bits. Conversely, in the case of receiving data, the UE (110) or the base station (120) may perform at least one of signal extraction from resources, per-antenna waveform demodulation, signal placement considering layer mapping, constellation demapping, descrambling, and channel decoding.

Table 5 represents an example of a DCI format in a next-generation RAT system.

[Table 5]

| DCI Format | Use |
|---|---|
| 0_0 | Scheduling of a PUSCH in one cell |

(continued)

| DCI Format | Use |
|---|---|
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-Co Location (QCL)

Antenna ports are defined such that the channel through which a symbol on an antenna port is carried can be inferred from the channel through which another symbol on the same antenna port is carried. Two antenna ports are said to be in a QC/QCL (quasi co-located or quasi co-location) relationship if the properties of the channel through which a symbol on one antenna port is carried can be inferred from the channel through which a symbol on another antenna port is carried.

Here, the channel characteristics include at least one of delay spread, Doppler spread, frequency/Doppler shift, average received power, received timing/average delay, and spatial Rx parameter. Here, the spatial Rx parameter refers to a spatial (reception) channel characteristic parameter such as angle of arrival.

The UE may be configured with a list of up to M TCI-State configurations in the higher layer parameter PDSCH-Config to decode the PDSCH according to the detected PDCCH having the intended DCI for the UE and the given serving cell. The M depends on the UE capability.

Each TCI-State includes parameters for establishing a quasi co-location relationship between one or two DL reference signals and the DM-RS port of the PDSCH.

The quasi co-location relationship is configured by the higher layer parameters qcl-Type1 for the first DL RS and qcl-Type2 (if set) for the second DL RS. For two DL RSs, the QCL types are not the same, regardless of whether the references are the same DL RS or different DL RSs.

The quasi co-location type corresponding to each DL RS is given by the higher layer parameter qcl-Type of QCL-Info, and can take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is a specific NZP CSI-RS, the corresponding NZP CSI-RS antenna port(s) can be indicated/configured to be QCL with a specific TRS from a QCL-Type A perspective and with a specific SSB from a QCL-Type D perspective. A UE that has received such an indication/configuration may receive the corresponding NZP CSI-RS using the Doppler and delay values measured at the QCL-TypeA TRS, and apply the reception beam used for QCL-TypeD SSB reception to the corresponding NZP CSI-RS reception.

The UE may receive an activation command by MAC CE signaling used to map up to eight TCI states to codepoints of the DCI field 'Transmission Configuration Indication'.

Artificial intelligence (AI) / machine learning (ML) related operations

AI/ML may be introduced/applied to the next-generation RAT system described in the present disclosure.

Incorporating AI into communications can streamline and improve real-time data transmission. AI can use numerous analytics to determine how complex target tasks should be performed. This means AI can increase efficiency and reduce processing delays. Time-consuming tasks such as handover, network selection, and resource scheduling can be performed instantly using AI. AI can also play a crucial role in machine-to-machine (M2M), machine-to-human, and human-to-machine communications. Furthermore, AI can facilitate rapid communication in brain-computer interfaces (BCIs). AI-based communication systems can be supported by metamaterials, intelligent structures, intelligent networks, intelligent devices, intelligent cognitive radios, self-sustaining wireless networks, and machine learning.

Hereinafter, a functional framework for AI/ML operations is described.

Hereinafter, for a more specific explanation of AI (or AI/ML), the terms can be defined as follows.

- Data collection: Data collected from network nodes, management entities, or terminals as a basis for AI model training, data analysis, and inference.
- AI Model: A data-driven algorithm that applies AI technology to generate a set of outputs containing prediction information and/or decision parameters based on a set of inputs.
- AI/ML Training: An online or offline process of training an AI model by learning features and patterns that best represent the data and obtain a trained AI/ML model for inference.
- AI/ML Inference: The process of making predictions or inducing decisions based on collected data and the AI model using a trained AI model.

The Life Cycle Management (LCM) process for AI/ML models (i.e., model training, model deployment, model inference, model monitoring, model update, etc.) can be divided into functionality-based LCM and model-based LCM. In functionality-based LCM, AI/ML models may not be identified by the network, and the network can direct the activation/deactivation/fallback/switching of AI/ML functionality. In model-ID (identifier)-based LCM, AI/ML models can be identified by the network, and the network/terminal can activate/deactivate/select/switch the AI/ML model through the model ID.

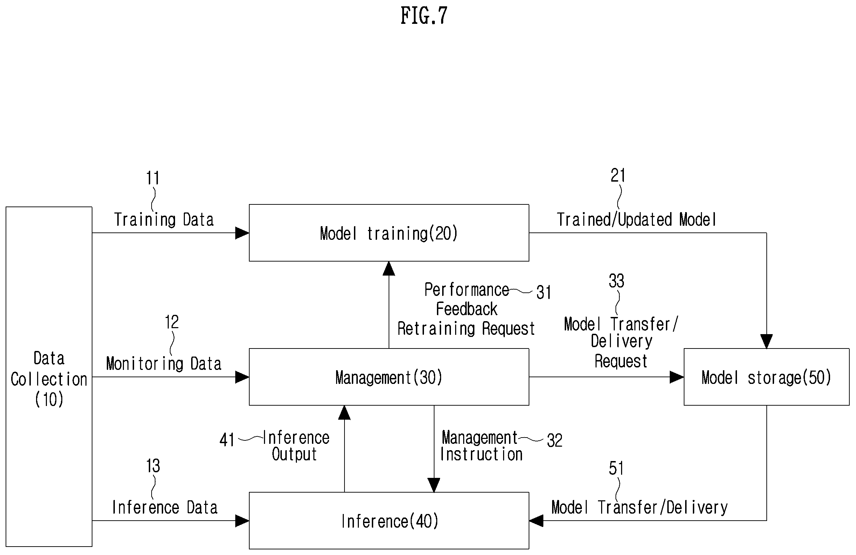

FIG. 7 illustrates a general functional architecture relevant to both Functionality-based LCM and Model-based LCM. Some of the functions or some of the data/information/command flows (i.e., arrows) illustrated in FIG. 7 may be omitted.

Referring to FIG. 7, a general functional framework can be configured to include a data collection function (10), a model training function (20), a management function (30), an inference function (40), and a model storage function (50).

The Data Collection function (10) is a function that provides input data to the Model Training function (20), Management function (30), and Inference function (40). The Data Collection function (10) can perform data preparation based on raw data and provide input data processed through data preparation. Examples of raw data may include received data/measurement data from terminals or other network entities, inference/output of AI/ML models, etc. The Data Collection function (10) may be performed by a single entity (e.g., terminal, network node, etc.) or may be performed by multiple entities.

Here, training data (11) refers to data required as input for the AI/ML Model Training function (20). Monitoring data (12) refers to data required as input for the Management (30) of the AI/ML model or AI/ML function. Inference data (13) refers to data required as input for the AI/ML Inference function (30).

The Model Training function (20) is a function that performs AI/ML model training, validation, and testing, which can generate model performance metrics that can be used as part of the AI/ML model testing procedure. The Model Training function (20) can perform data preparation (e.g., data pre-processing and cleaning, forming, and transformation) based on the Training Data (11) transferred from the Data Collection function (10), if necessary.

Trained/Updated Model (21): If there is a Model Storage function (50), it is used to pass a trained, validated and tested AI/ML model to the Model Storage function (50) or to pass an updated version of the model to the Model Storage function (50).

The Management function (30) is a function that supervises the operation of the AI/ML model or AI/ML function. In addition, the Management function (30) may perform a decision to ensure appropriate inference operation based on data received from the Data Collection function (10) (i.e., Monitoring Data (12)) and/or data received from the Inference function (40) (i.e., Inference Output (41)).

Management Instruction (32) is information required as input to manage the Inference function (40). The related information may include selection/(de)activation/switching of an AI/ML model or an AI/ML-based function, and may also include fallback to a non-AI/ML operation (i.e., not relying on the inference process).

A Model Transfer/Delivery Request (33) can be used to request model(s) from Model Storage (50).

Performance Feedback/Retraining Request (31) refers to information required as input to the Model Training function (20) (e.g., for the purpose of (re)training or updating the model).

The Inference function (40) is a function that provides output from the process of applying an AI/ML model or AI/ML function using data (i.e., Inference Data (13)) provided by the Data Collection (10) as input. Data preparation (e.g., data preprocessing and cleaning, formatting and transformation) may be performed based on the Inference Data (13) delivered by the Data Collection (10). The Inference function (40) may also perform data preparation (e.g., data preprocessing and cleaning, forming and transformation) based on the Inference Data (13) provided by the Data Collection function (10), if necessary.

Inference Output (41) is data used in the Management function (30) to monitor the performance of an AI/ML model or AI/ML function. Inference Output (41) may include the inference output of the AI/ML model generated by the Inference function (30), and the details of the inference output may vary depending on the use case.

The Model Storage function (50) is a function for storing a learned/updated model that can be used to perform the Inference function (40). The Model Storage function (50) illustrated in FIG. 7 can be used as a reference point (if any) when applicable to protocol termination, model transmission/delivery, and related processes. Furthermore, the Model Storage function (50) is merely an example and is not intended to limit the storage location of actual AI/ML models, and may be omitted.

Model Transfer/Delivery (51) is used to transfer AI/ML models to inference functions.

The level of cooperation can be defined as follows depending on the capability of AI/ML functions between multiple nodes, and variations due to combination of multiple levels or separation of any one level are also possible.

Cat 0a) No collaboration framework: AI/ML algorithms are purely implementation-based and do not require any changes to the wireless interface.

Cat 0b) This level corresponds to a framework with a modified wireless interface tailored to efficient implementation-based AI/ML algorithms, but without collaboration.

Cat 1) Inter-node support is provided to improve the AI/ML algorithms of each node. For example, this applies when a specific node receives support from another node (for training, adaptation, etc.) and vice versa. At this level, model exchange between network nodes is not required.

Cat 2) Joint AI/ML tasks can be performed between multiple nodes. This level requires AI/ML model commands or exchange between network nodes.

FIG. 7 is a diagram illustrating an overall functional framework for an AI/ML model, and not all functions and/or all data/information/command signals illustrated in FIG. 7 may be performed within a specific node, but only some of them may be performed.

AI/ML models can be divided into one-side models and two-side models depending on whether training and/or inference is performed on one node or jointly/sequentially on multiple nodes.

A one-side model may refer to an AI/ML model in which inference is performed entirely by a single node (e.g., a terminal or network). Here, the training of the AI/ML model may also be performed entirely by a single node. The training and inference of the AI/ML model may be performed by the same node, or they may be performed by separate nodes.

A two-side model may refer to an AI/ML model in which joint inference is performed across multiple nodes (e.g., terminals and networks). Joint inference means that inference is performed jointly across multiple nodes. For example, a first part of the inference may be performed by a first node, and the remaining part of the inference may be performed by a second node. Two-side models may be categorized into several types, as follows, depending on the training method of the AI/ML model.

- First type: AI/ML models can be trained on a single node. In this case, joint training can be performed. The trained model can then be distributed to other nodes/objects.

- Second type: Joint training of AI/ML models can be performed on multiple nodes/entities (e.g., networks and terminals) respectively. Joint training can mean that model generation (e.g., CSI generation part) and model reconstruction (CSI compression by sub-use case) are trained in the same loop for forward activation and backward gradient. In this type, joint training can include both simultaneous training (i.e., model generation training and model reconstruction training are performed simultaneously) and sequential training (i.e., model reconstruction training is performed after model generation training).

- Third type: Separate training of AI/ML models can be performed on multiple nodes (e.g., networks and terminals). Separate training may mean that training starts sequentially on one node and continues on other nodes. In this case, if the first node first performs the AI/ML model and shares the training data with the second node, the second node can perform the AI/ML model using the shared training data. For example, training for the CSI generation part may be performed by the terminal, and CSI reconstruction may be performed by the network.

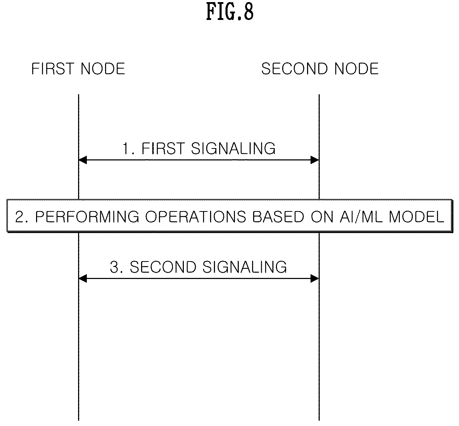

The operations described in the present disclosure described below can be explained/interpreted based on the AI/ML model as shown in FIG. 8 below, even without separate mention (i.e., without explicit mention of by/based on/for the AI/ML model).

In addition, unless specifically limited in the description of the present disclosure, the AI/ML model may correspond to a one-side model in which inference is entirely performed by one node or a two-side model in which joint inference is performed by multiple nodes.

Step 1: In the description of the present disclosure described below, signaling (e.g., information/data/channel/-signal, etc.) or a set of signaling between a specific node (e.g., terminal, network, etc.) and another node may be interpreted as the signaling or set of signaling of Step 1 used to perform an operation based on an AI/ML model, even if not otherwise mentioned. For example, it may correspond to training data for training (i.e., generation and/or reconstruction) the AI/ML model of FIG. 7, or correspond to inference data used for inference of the AI/ML model, or correspond to feedback for the AI/ML model, etc. If signaling between nodes is not required prior to an operation based on an AI/ML model in the present disclosure, Step 1 may be omitted. If a one-side model is used in the present disclosure, the unidirectional/bidirectional signaling (set) in the present disclosure may correspond to the signaling of Step 1. In addition, when a two-side model is used in the present disclosure, the one-way/two-way signaling in the present disclosure may correspond to one-stage signaling, and also, a repetitive signaling operation may correspond to one-stage signaling.

For example, in AI/ML model-based beam management (BM), if a base station predicts (i.e., infers) beam(s) with good quality based on an AI/ML model, the base station can receive quality/intensity information for multiple beams from a terminal. Furthermore, if a terminal predicts (i.e., infers) beam(s) with good quality based on an AI/ML model, the terminal may receive multiple beams from the base station.

Step 2: In the description of the present disclosure described below, an operation (e.g., calculation, selection, prediction, etc.) in a specific node (e.g., terminal, network, etc.) or a joint operation (e.g., calculation, selection, prediction, etc.) in multiple nodes (e.g., terminal, network, etc.) may correspond to a step 2 operation based on one or more functions in the functional framework of the AI/ML model, even if not mentioned separately. For example, it may correspond to training (i.e., generation and/or reconstruction) of the AI/ML model of FIG. 7 or inference of the AI/ML model, etc. When a one-side model is used, an operation performed by a single node in the present disclosure may correspond to a step 2 operation, and also, when a two-side model is used, a joint operation performed by multiple nodes in the present disclosure may correspond to a step 2 operation.

For example, in an AI/ML model-based BM, a base station can use quality/intensity information for multiple beams received from a terminal as inference data to predict (i.e., infer) beam(s) with good quality based on an AI/ML model. In addition, the terminal can measure multiple beams received from the base station and use the measurement results as inference data to predict (i.e., infer) beam(s) with good quality based on an AI/ML model.

Step 3: In the description of the present disclosure described below, signaling (e.g., information/data/channel/-signal, etc.) or a set of signaling between a specific node (e.g., terminal, network, etc.) and another node may be interpreted as a three-step signaling or a set of signaling generated due to (as a result of) an operation based on an AI/ML model, even if not otherwise mentioned. For example, it may correspond to an output resulting from inference of the AI/ML model in FIG. 7. If signaling between nodes is not required as a result of an operation based on an AI/ML model in the present disclosure, step 3 may be omitted. If a one-side model is used in the present disclosure, a one-way/two-way signaling (set) in the present disclosure may correspond to the three-step signaling. In addition, when a two-side model is used in the present disclosure, the one-way/two-way signaling in the present disclosure may correspond to three-stage signaling, and also, the repetitive signaling operation may correspond to three-stage signaling.

For example, in an AI/ML model-based BM, a base station may transmit to a terminal beam(s) predicted based on the AI/ML model as candidates so that the terminal can determine an optimal beam. Furthermore, the terminal may report to the base station beam(s) predicted based on the AI/ML model to request the base station to transmit candidate beams as candidates for determining an optimal beam.

Support for subband precoding for uplink transmission and reception

In the present disclosure, methods for supporting subband precoding for uplink transmission and reception in an enhanced wireless communication system are proposed through detailed examples.

In the present disclosure, subband precoding may refer to precoding applied on a subband basis, that is, applied per subband. For example, when subband precoding is considered, different precoders may be applied/indicated/supported on a per-subband basis.

In the present disclosure, as a representative example, methods for supporting/indicating subband precoding for UL PUSCH transmission are described, but the proposed methods of the present disclosure may be extended and applied to transmission of other uplink channels/signals.

In a conventional wireless communication system, with respect to UL PUSCH transmission, only wideband precoding, in which the same precoder is applied to all scheduled RBs, has been supported. In contrast, subband precoding proposed in the present disclosure may support different precoding on a per-subband basis. Through this, digital beamforming optimized for each subband in a frequency selective channel is possible, and there is a technical effect in that improved UL throughput may be achieved.

With respect to the above-described subband precoding, hereinafter, a method in which a base station indicates, to a UE, a precoder for each subband to be applied to codebook-based (CB) PUSCH transmission is proposed.

As a method of indicating a precoder for each subband, increasing a size of a field indicating precoding information for UL transmission (hereinafter, a UL TPMI (transmit precoding matrix indicator) field, a TPMI field in DCI scheduling UL transmission), or extending the field into multiple fields may be most simply considered. As one example, the UL TPMI field may include a precoding information and number of layers field in UL DCI. However, since this method may significantly increase DCI overhead according to a number of subbands, it may be inefficient.

In consideration of the above, the present disclosure proposes a method of indicating a single precoder using one UL TPMI field in DCI, while indicating subband precoders by interpreting the indicated precoder differently from the conventional interpretation.

Specifically, according to the proposed method of the present disclosure, a UE interprets a precoding vector for each layer of a multi-layer precoder indicated by the UL TPMI field as a precoding vector for each subband, and the UE may transmit a PUSCH by applying subband precoding based thereon. That is, a base station may configure/indicate subband-level precoders to the UE through a multi-layer precoder in consideration of the above-described interpretation at the UE.

In this regard, a UE capable of supporting the proposed method of the present disclosure may be configured/indicated by a base station with information on activation (enable) or deactivation (disable) of subband precoding, and the UE may perform PUSCH transmission through interpretation of a UL TPMI field based thereon. Additionally or alternatively, when a UE capable of supporting the proposed method of the present disclosure is configured/indicated to perform PUSCH transmission on a subband basis, the UE may consider that subband precoding is activated and may perform PUSCH transmission through interpretation of the UL TPMI field based thereon.

Hereinafter, specific examples of applying subband precoding according to the proposed method of the present disclosure are described.

Embodiment 1

The present embodiment relates to a method of indicating/applying subband precoding when a rank value of a UL channel/signal to which subband precoding is applied is 1.

When the proposed method of the present disclosure is applied, a UE may interpret a precoder (i.e., a precoder matrix) indicated by a TPMI index according to the manner described in the present embodiment, and may perform PUSCH transmission based on the interpretation. In the present embodiment, for clarity of description, a description related to a power normalization scaling value of the indicated precoder is omitted.

For example, Table 6 illustrates a TPMI index and a rank-3 UL precoder.

[Table 6]

| TPMI index | $W$ (arranged from left to right in ascending order of TPMI index) | | | |
|---|---|---|---|---|
| 0-3 | $\frac{1}{2}\begin{bmatrix} 1 & 0 & 0 \\ 0 & 1 & 0 \\ 0 & 0 & 1 \\ 0 & 0 & 0 \end{bmatrix}$ | $\frac{1}{2}\begin{bmatrix} 1 & 0 & 0 \\ 0 & 1 & 0 \\ 1 & 0 & 0 \\ 0 & 0 & 1 \end{bmatrix}$ | $\frac{1}{2}\begin{bmatrix} 1 & 0 & 0 \\ 0 & 1 & 0 \\ -1 & 0 & 0 \\ 0 & 0 & 1 \end{bmatrix}$ | $\frac{1}{2\sqrt{3}}\begin{bmatrix} 1 & 1 & 1 \\ 1 & -1 & 1 \\ 1 & 1 & -1 \\ 1 & -1 & -1 \end{bmatrix}$ |

(continued)

| TPMI index | W (arranged from left to right in ascending order of TPMI index) | | | |
|---|---|---|---|---|
| 4-6 | $\dfrac{1}{2\sqrt{3}}\begin{bmatrix} 1 & 1 & 1 \\ 1 & -1 & 1 \\ j & j & -j \\ j & -j & -j \end{bmatrix}$ | $\dfrac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\dfrac{1}{2\sqrt{3}}\begin{bmatrix} 1 & 1 & 1 \\ -1 & 1 & -1 \\ j & j & -j \\ -j & j & j \end{bmatrix}$ | - |

Referring to Table 6, when a TPMI index is indicated as 3, a legacy UE may transmit a PUSCH by applying precoding vectors [1 1 1 1]$^T$, [1 -1 1 -1]$^T$, and [1 1 -1 -1]$^T$ to a first layer, a second layer, and a third layer, respectively.

In contrast, a UE applying the proposed method of the present disclosure may transmit a PUSCH with a single layer by applying the precoding vectors [1 1 1 1]$^T$, [1 -1 1 -1]$^T$, and [1 1 -1 -1]$^T$ to a first subband, a second subband, and a third subband, respectively. That is, the UE may sequentially apply each precoding vector to scheduled subbands. In this case, when the last precoding vector is applied, a cyclic rotation mapping scheme in which the first precoding vector is applied again starting from a next subband may be considered. Here, the first precoding vector may refer to a first column in a precoding matrix indicated by the UL TPMI field, and the last precoding vector may refer to a last column in the precoding matrix indicated by the UL TPMI field.

That is, by performing vector-to-subband mapping instead of vector-to-layer mapping of a precoder indicated to a UE, different precoders may be applied on a per-subband basis. Through this scheme, precoding vectors within a given/defined precoding set (i.e., a precoding matrix) are cyclically applied on a per-subband basis, and based thereon, a diversity gain may be obtained.

Additionally, a method in which a base station configures/indicates, to a UE, an index of a precoding vector mapped to a first subband may also be applied. For example, when an index of a precoding vector mapped to the first subband is configured/indicated as 1, the first precoding vector is mapped to the first subband as in the above-described operation. In contrast, when an index of a precoding vector mapped to the first subband is configured/indicated as 2, a second precoding vector is mapped to the first subband, and from a next subband, precoding vectors in the precoding matrix may be sequentially mapped according to cyclic rotation mapping.

When the proposed method of the present disclosure is used, a rank of a PUSCH may be fixed to 1 when subband precoding is applied. When a rank of the PUSCH is 2 or higher, even if wideband precoding is applied, a probability that all layers fall into deep fading for a specific subband is small. Accordingly, even when wideband precoding is applied, a penalty due to a frequency selective channel is smaller than that in a case of rank-1 wideband-based PUSCH transmission. Therefore, application of the proposed method of the present disclosure may be considered only when a rank value of the PUSCH is 1.

Additionally, in addition to a case where the rank value is 1, the proposed method of the present disclosure may be extended and applied to a case where the rank value is r (where r > 1).

Embodiment 2

The present embodiment relates to a method of indicating/applying subband precoding when a rank value of a UL channel/signal to which subband precoding is applied is greater than 1.

Specifically, when a rank value is r (where r > 1), a method may be considered in which, with respect to precoding vectors in a precoding matrix of a TPMI indicated to a UE, r vectors are grouped in order, and each vector group is sequentially applied/mapped to scheduled subbands.

For example, Table 7 illustrates a TPMI index and a rank-4 UL precoder.

[Table 7]

| TPMI index | W (arranged from left to right in ascending order of TPMI index) | | | |
|---|---|---|---|---|
| 0-3 | $\dfrac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\dfrac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\dfrac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\dfrac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |

(continued)

| TPMI index | $W$ (arranged from left to right in ascending order of TPMI index) | | | |
|---|---|---|---|---|
| 4 | $\dfrac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

Referring to Table 7, when a TPMI index is indicated as 3 and a rank value of a PUSCH, that is, an r value, is 2, precoding vectors [1 1 1 1]$^T$ and [1 -1 1 -1]$^T$ may be agreed/considered/grouped as a first vector group, and precoding vectors [1 1 -1 -1]$^T$ and [1 -1 -1 1]$^T$ may be agreed/considered/grouped as a second vector group. Based thereon, the first vector group and the second vector group may be sequentially applied/mapped to a first scheduled subband and a second scheduled subband, respectively. For a next scheduled subband, the first vector group may be applied/mapped again according to a cyclic rotation mapping scheme.

In this regard, a base station may need to signal, to a UE, a rank value of a PUSCH, that is, an r value, separately from a rank indicator (RI) value of an existing TPMI field.

Additionally or alternatively, a rank value of a PUSCH, that is, an r value, may be determined as "r = a maximum rank value" by using a maximum rank value previously indicated by a base station through RRC signaling or the like. For example, when the maximum rank value is 2, a UE interprets the r value as 2, and may group, in order, two vectors at a time with respect to a precoding matrix of an indicated TPMI, as in the above-described example.

In a conventional TPMI field, a large field size is used in order to jointly indicate a rank indicator (RI) value and a precoding matrix indicator (PMI) value.

In contrast, when the proposed method of the present disclosure is applied, an RI value indicates a number of precoding vectors that are rotated and applied to scheduled subband(s). As one example, when a rank value of a PUSCH, that is, an r value, is 1 and an RI value is 4, a total of four precoding vectors may be rotated over and applied to subbands.

In consideration of the above, when the proposed method of the present disclosure is applied, an RI value need not be dynamically indicated/applied through a TPMI field. In this case, the RI value may be configured/indicated through an RRC message/signaling by a base station, or may be a value determined according to a number of scheduled subbands (or an entire bandwidth, a number of subbands constituting the total bandwidth, or the like). Accordingly, when the proposed method of the present disclosure is applied, a TPMI field may be newly defined to convey only information on a PMI value excluding information on an RI value, and DCI overhead may be reduced according to a reduced TPMI field size.

For example, an RI value may be determined as a number of scheduled subbands (N_SB). That is, when N_SB is 1, a rank-1-based precoding matrix (e.g., a rank-1-based codebook) is used, and when N_SB is 2, a rank-2-based precoding matrix (e.g., a rank-2-based codebook) may be used. Based thereon, a size of a TPMI field may be defined/determined to include all precoding matrices (e.g., codebooks) for "RI = {1, 2, 3, ..., min(a maximum number of subbands schedulable for one UE, a maximum rank supportable in a precoding matrix (e.g., a codebook))}". Additionally, when a rank value of a PUSCH, that is, an r value, is greater than 1, the size of the TPMI field may be defined/determined to include all precoding matrices (e.g., codebooks) for "RI = {1*r*, 2r, 3*r, ..., min(a maximum number of subbands schedulable for one UE*r, a maximum rank supportable in a precoding matrix (e.g., a codebook))}".

As another example, an RI value may be determined as a number of subbands (M_SB) constituting an entire bandwidth. That is, when M_SB is 1, a rank-1-based precoding matrix (e.g., a rank-1-based codebook) is used, and when M_SB is 2, a rank-2-based precoding matrix (e.g., a rank-2-based codebook) may be used. Based thereon, a size of a TPMI field may be defined/determined to include all precoding matrices (e.g., codebooks) for "RI = {min(M_SB, a maximum rank supportable in a precoding matrix (e.g., a codebook))} ". Additionally, when a rank value of a PUSCH, that is, an r value, is greater than 1, the size of the TPMI field may be defined/determined to include all precoding matrices (e.g., codebooks) for "RI = {min(M_SB*r, a maximum rank supportable in a precoding matrix (e.g., a codebook))}".

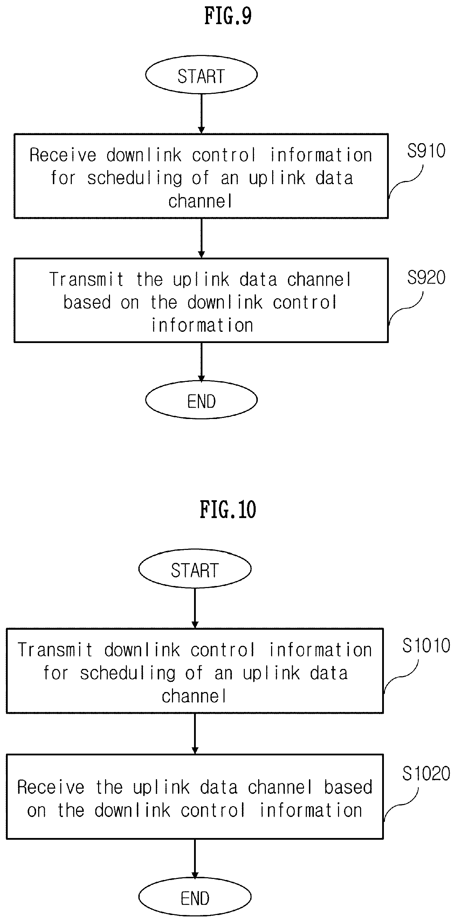

FIG. 9 and FIG. 10 illustrate UE operations and base station operations in relation to a method of indicating/applying subband precoding for uplink transmission according to the above-described embodiments of the present disclosure.

FIG. 9 is a diagram for describing operations of a UE in a wireless communication system to which the present disclosure may be applied.

Referring to FIG. 9, a UE may receive DCI for scheduling of an uplink data channel (e.g., PUSCH) (S910).

Thereafter, the UE may transmit the uplink data channel based on the DCI (S920).

In this regard, when subband-based precoding is applied to the uplink data channel, at least one vector in a precoding matrix indicated by the DCI (e.g., a precoding vector) may be applied as precoding information to at least one subband of the uplink data channel.

For example, when a rank value of the uplink data channel is 1, at least one vector in the precoding matrix indicated by the DCI may be sequentially mapped one by one to each subband of the uplink data channel. In this regard, when a last vector in the precoding matrix is mapped to an n-th subband, a first vector in the precoding matrix may be cyclically mapped to an (n+1)-th subband (i.e., a next subband) (e.g., the cyclic rotation mapping scheme described above in the present disclosure).

As another example, when a rank value of the uplink data channel is r (where r > 1), at least one vector in a precoding matrix indicated by the DCI may be sequentially mapped, on a per-subband basis, in units of vector groups to the uplink data channel. Here, each vector group may be composed of r vectors in the precoding matrix. In this regard, when a last vector group in the precoding matrix is mapped to an m-th subband, a first vector group in the precoding matrix may be cyclically mapped to an (m+1)-th subband (i.e., a next subband) (e.g., the cyclic rotation mapping scheme described above in the present disclosure). In this case, the r value may be indicated by a base station, or may be determined based on a maximum rank value indicated to the UE.

Additionally or alternatively, in relation to the above-described operation, information indicating a vector or a vector group to be mapped to a first subband among at least one subband for the uplink data channel may be indicated to the UE.

Additionally or alternatively, the above-described precoding matrix may correspond to a multi-layer precoding matrix that is indicated/defined for wideband-based precoding. In this regard, a rank value of the precoding matrix may be indicated by a base station, or may be determined based on at least one of a number of subbands scheduled for an uplink data channel, a total bandwidth, or a number of subbands constituting the total bandwidth.

For example, when a rank value of the precoding matrix is determined as a number of subbands scheduled for the uplink data channel, a size of a specific field in DCI indicating the precoding matrix (e.g., a TPMI field) is determined based on precoding matrices for cases where the rank value is {1*r, 2*r, 3*r, ..., a smaller value between a maximum number of subbands schedulable for one UE and a maximum rank supportable in the precoding matrix}, where r may indicate a rank value of the uplink data channel. As another example, when a rank value of the precoding matrix is determined as a number of subbands constituting an entire bandwidth, a size of a specific field in DCI indicating the precoding matrix (e.g., a TPMI field) is determined based on precoding matrices for cases where the rank value is {a smaller value between (the number of subbands constituting the total bandwidth)*r and a maximum rank supportable in the precoding matrix}, where r may indicate a rank value of the uplink data channel.

Additionally or alternatively, in relation to the above-described operation, based on the DCI, an uplink data channel to which different precoding information is applied per subband may be transmitted through a single layer.

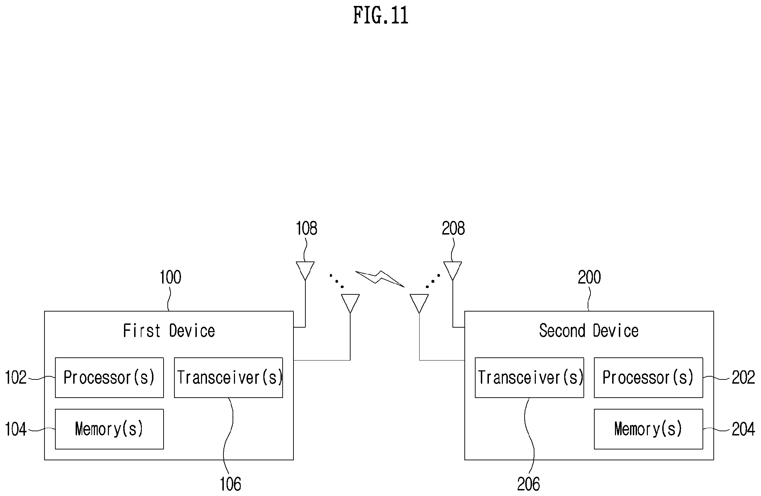

The method described in the example of FIG. 9 may be performed by a first device (100) of FIG. 11. That is, a UE of FIG. 11 may be implemented as the first device (100). For example, one or more processors (102) of the first device (100) of FIG. 11 may be configured to receive downlink control information (DCI) for scheduling of an uplink data channel through one or more transceivers (106), and to transmit the uplink data channel based on the DCI.

Furthermore, one or more memories (104) of the first device (100) may store instructions for performing the method described in the example of FIG. 9 or examples to be described later, when executed by one or more processors (102).

FIG. 10 is a diagram for describing operations of a base station in a wireless communication system to which the present disclosure may be applied.

Referring to FIG. 10, a base station may transmit DCI for scheduling of an uplink data channel (e.g., PUSCH) (S1010).

Thereafter, the base station may receive the uplink data channel based on the DCI (S1020).

In this regard, when subband-based precoding is applied to the uplink data channel, at least one vector in a precoding matrix (e.g., a precoding vector) indicated by the DCI may be applied as precoding information to at least one subband of the uplink data channel.

Specific features regarding a rank value of the uplink data channel, mapping between vectors/vector groups in a precoding matrix based thereon and subbands, and a specific field in DCI indicating the precoding matrix are the same as those described with reference to FIG. 9, and thus redundant descriptions are omitted.

The method described in the example of FIG. 10 may be performed by a second device (200) of FIG. 11. That is, the base station of FIG. 10 may be implemented as the second device (200). For example, one or more processors (202) of the second device (200) of FIG. 10 may be configured to transmit downlink control information (DCI) for scheduling of an uplink data channel through one or more transceivers (206), and to receive the uplink data channel based on the DCI.

Furthermore, one or more memories (204) of the second device (200) may store instructions for performing the method described in the example of FIG. 10 or examples to be described later, when executed by one or more processors (202).

General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, LTE-A, LTE-A pro, NR, 5G, 5G-A, 6G).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method performed by a UE in a wireless communication system, the method comprising:

   receiving downlink control information (DCI) for scheduling an uplink data channel; and
   transmitting the uplink data channel based on the DCI,
   wherein, based on subband-based precoding being applied to the uplink data channel, at least one vector in a precoding matrix indicated by the DCI is applied as precoding information to at least one subband of the uplink data channel.

2. The method of claim 1,
   wherein, based on a rank value of the uplink data channel being 1, the at least one vector in the precoding matrix is sequentially mapped, one by one, to each subband of the uplink data channel.

3. The method of claim 2,
   wherein, based on a last vector in the precoding matrix being mapped to an n-th subband, a first vector in the precoding matrix is cyclically mapped to an (n+1)-th subband.

4. The method of claim 1,

   wherein, based on a rank value of the uplink data channel being r (where r > 1), the at least one vector in the precoding matrix is sequentially mapped, on a per-subband basis, in units of vector groups to the uplink data channel, and
   wherein each vector group is composed of r vectors in the precoding matrix.

5. The method of claim 4,
   wherein, based on a last vector group in the precoding matrix being mapped to an m-th subband, a first vector group in the precoding matrix is cyclically mapped to an (m+1)-th subband.

6. The method of claim 4,
   wherein the r value is indicated by a base station or is based on a maximum rank value indicated to the UE.

7. The method of claim 1,

wherein information indicating a vector or a vector group to be mapped to a first subband among at least one subband for the uplink data channel is indicated for the UE.

8. The method of claim 1,

   wherein the precoding matrix corresponds to a multi-layer precoding matrix defined for wideband-based precoding, and
   wherein a rank value of the precoding matrix is indicated by a base station or is based on at least one of a number of subbands scheduled for the uplink data channel, an entire bandwidth, or a number of subbands constituting the entire bandwidth.

9. The method of claim 8,

   wherein, based on a rank value of the precoding matrix being determined as the number of subbands scheduled for the uplink data channel,
   a size of a specific field in the DCI indicating the precoding matrix is determined based on precoding matrices for cases where the rank value is {1*r, 2*r, 3*r, ..., a smaller value between a maximum number of subbands schedulable for one UE and a maximum rank supportable in the precoding matrix},
   wherein r is a rank value of the uplink data channel.

10. The method of claim 8,

    wherein, based on a rank value of the precoding matrix being determined as the number of subbands constituting the entire bandwidth,
    a size of a specific field in the DCI indicating the precoding matrix is determined based on precoding matrices for cases where the rank value is {a smaller value between (the number of subbands constituting the total bandwidth) *r and a maximum rank supportable in the precoding matrix},
    wherein r is a rank value of the uplink data channel.

11. The method of claim 1,
    wherein, based on the DCI, the uplink data channel to which different precoding information is applied per subband is transmitted through a single layer.

12. A user equipment (UE) in a wireless communication system, the UE comprising:

    at least one transceiver; and
    at least one processor coupled to the at least one transceiver;
    wherein the at least one processor is configured to:

       receive downlink control information (DCI) for scheduling an uplink data channel; and
       transmit the uplink data channel based on the DCI,

    wherein, based on subband-based precoding being applied to the uplink data channel, at least one vector in a precoding matrix indicated by the DCI is applied as precoding information to at least one subband of the uplink data channel.

13. A method performed by a base station in a wireless communication system, the method comprising:

    transmitting downlink control information (DCI) for scheduling an uplink data channel; and
    receiving the uplink data channel based on the DCI,
    wherein, based on subband-based precoding being applied to the uplink data channel, at least one vector in a precoding matrix indicated by the DCI is applied as precoding information to at least one subband of the uplink data channel.

14. A base station in a wireless communication system, the base station comprising:

    at least one transceiver; and
    at least one processor coupled to the at least one transceiver;

wherein the at least one processor is configured to:

transmit downlink control information (DCI) for scheduling an uplink data channel; and
receive the uplink data channel based on the DCI,

wherein, based on subband-based precoding being applied to the uplink data channel, at least one vector in a precoding matrix indicated by the DCI is applied as precoding information to at least one subband of the uplink data channel.

15. A processing device configured to control a user equipment (UE) in a wireless communication system, the processing device comprising:

at least one processor; and
at least one computer memory operatively coupled to the at least one processor and storing instructions for performing operations upon being executed by the at least one processor,
wherein the operations comprise:

receiving downlink control information (DCI) for scheduling an uplink data channel; and
transmitting the uplink data channel based on the DCI,

wherein, based on subband-based precoding being applied to the uplink data channel, at least one vector in a precoding matrix indicated by the DCI is applied as precoding information to at least one subband of the uplink data channel.

16. At least one non-transitory computer readable medium storing at least one instruction, wherein:

the at least one instruction executed by at least one processor controls a device to:

receive downlink control information (DCI) for scheduling an uplink data channel; and
transmit the uplink data channel based on the DCI,

wherein, based on subband-based precoding being applied to the uplink data channel, at least one vector in a precoding matrix indicated by the DCI is applied as precoding information to at least one subband of the uplink data channel.

FIG.1

# FIG.2

# FIG.3

# FIG.4

# FIG.5

## FIG.6

UE (110)                                                    BS (110)

Synchronization (101)

Obtain System Information (103)

Random Access (105)

Control Information Signaling (107)

Transmit/Receive Data (109)

# FIG.7

EP 4 757 197 A1

# FIG.8

FIRST NODE                    SECOND NODE

1. FIRST SIGNALING

2. PERFORMING OPERATIONS BASED ON AI/ML MODEL

3. SECOND SIGNALING

# FIG.9

START

Receive downlink control information for scheduling of an uplink data channel — S910

Transmit the uplink data channel based on the downlink control information — S920

END

# FIG.10

START

Transmit downlink control information for scheduling of an uplink data channel — S1010

Receive the uplink data channel based on the downlink control information — S1020

END

# FIG.11

## INTERNATIONAL SEARCH REPORT

| International application No. |
| --- |
| **PCT/KR2024/010910** |

| A. | CLASSIFICATION OF SUBJECT MATTER |
| --- | --- |

**H04B 7/0456**(2017.01)i; **H04B 7/06**(2006.01)i; **H04W 72/0453**(2023.01)i; **H04W 72/1268**(2023.01)i; **H04W 72/232**(2023.01)i

According to International Patent Classification (IPC) or to both national classification and IPC

| B. | FIELDS SEARCHED |
| --- | --- |

Minimum documentation searched (classification system followed by classification symbols)

H04B 7/0456(2017.01); H04B 7/0417(2017.01); H04B 7/06(2006.01); H04L 5/00(2006.01); H04W 72/04(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크 서브밴드 기반 프리코딩(uplink subband-based precoding), 프리코딩 행렬(precoding matrix), 벡터(vector), 랭크 값(rank value)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2021-0126681 A1 (QUALCOMM INCORPORATED) 29 April 2021 (2021-04-29)<br>See paragraphs [0052], [0071], [0089] and [0174]-[0175]; and figures 5 and 18. | 1-8,11-16 |
| A | | 9-10 |
| Y | US 2020-0322026 A1 (QUALCOMM INCORPORATED) 08 October 2020 (2020-10-08)<br>See paragraph [0069]; and figures 7A-7D. | 1-8,11-16 |
| Y | US 2020-0106491 A1 (HUAWEI TECHNOLOGIES CO., LTD.) 02 April 2020 (2020-04-02)<br>See paragraphs [0266], [0272] and [0291]. | 2-6,8 |
| A | US 2022-0123897 A1 (SAMSUNG ELECTRONICS CO., LTD.) 21 April 2022 (2022-04-21)<br>See paragraphs [0138]-[0174]; and figure 14A. | 1-16 |
| A | US 2023-0040860 A1 (YUAN, Fang et al.) 09 February 2023 (2023-02-09)<br>See paragraphs [0081]-[0126]; and figures 5-15. | 1-16 |

☐ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 November 2024** | **01 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/010910**

| Patent document cited in search report | | | Publication date (day/month/year) | Patent family member(s) | | | Publication date (day/month/year) |
|---|---|---|---|---|---|---|---|
| US | 2021-0126681 | A1 | 29 April 2021 | CN | 114731179 | A | 08 July 2022 |
| | | | | CN | 114731179 | B | 26 March 2024 |
| | | | | EP | 4049378 | A1 | 31 August 2022 |
| | | | | US | 11394434 | B2 | 19 July 2022 |
| | | | | WO | 2021-080712 | A1 | 29 April 2021 |
| US | 2020-0322026 | A1 | 08 October 2020 | US | 11159221 | B2 | 26 October 2021 |
| | | | | WO | 2020-205439 | A1 | 08 October 2020 |
| US | 2020-0106491 | A1 | 02 April 2020 | BR | 112019025541 | A2 | 16 June 2020 |
| | | | | CN | 108880644 | A | 23 November 2018 |
| | | | | CN | 108880644 | B | 11 June 2019 |
| | | | | CN | 108880645 | A | 23 November 2018 |
| | | | | CN | 108880645 | B | 27 August 2019 |
| | | | | CN | 109309518 | A | 05 February 2019 |
| | | | | CN | 109309518 | B | 07 September 2021 |
| | | | | CN | 110892648 | A | 17 March 2020 |
| | | | | CN | 110892648 | B | 09 July 2021 |
| | | | | EP | 3661076 | A1 | 03 June 2020 |
| | | | | EP | 3661076 | B1 | 06 July 2022 |
| | | | | JP | 2020-526093 | A | 27 August 2020 |
| | | | | US | 11683076 | B2 | 20 June 2023 |
| | | | | WO | 2019-019839 | A1 | 31 January 2019 |
| US | 2022-0123897 | A1 | 21 April 2022 | CN | 110582980 | A | 17 December 2019 |
| | | | | CN | 110582980 | B | 28 March 2023 |
| | | | | CN | 116112141 | A | 12 May 2023 |
| | | | | EP | 3591881 | A1 | 08 January 2020 |
| | | | | KR | 10-2018-0112648 | A | 12 October 2018 |
| | | | | KR | 10-2022-0099514 | A | 13 July 2022 |
| | | | | KR | 10-2414527 | B1 | 30 June 2022 |
| | | | | US | 11343043 | B2 | 24 May 2022 |
| | | | | US | 11855923 | B2 | 26 December 2023 |
| | | | | US | 2020-0127786 | A1 | 23 April 2020 |
| | | | | US | 2024-0072969 | A1 | 29 February 2024 |
| | | | | WO | 2018-186652 | A1 | 11 October 2018 |
| US | 2023-0040860 | A1 | 09 February 2023 | CN | 115053466 | A | 13 September 2022 |
| | | | | EP | 4097849 | A1 | 07 December 2022 |
| | | | | EP | 4097849 | A4 | 21 February 2024 |
| | | | | WO | 2021-151231 | A1 | 05 August 2021 |

Form PCT/ISA/210 (patent family annex) (July 2022)